# EUROPÄISCHE PATENTSCHRIFT

(11) **EP 1 372 996 B1**
(45) Veröffentlichungstag und Bekanntmachung des Hinweises auf die Patenterteilung: **17.09.2008**
(21) Anmeldenummer: 02719889.4
(22) Anmeldetag: 21.02.2002
(51) Int. Cl.: B60H 1/00

(54) **BEDIENEINHEIT MIT WENIGSTENS EINEM BEDIENELEMENT FÜR EINE KLIMAANLAGE UND/ODER -AUTOMATIK**
OPERATING UNIT COMPRISING AT LEAST ONE OPERATING ELEMENT FOR AN AIR CONDITIONING INSTALLATION AND/OR AN AUTOMATIC AIR CONDITIONING SYSTEM
UNITE DE COMMANDE EQUIPEE D'AU MOINS UN ELEMENT DE COMMANDE POUR UNE INSTALLATION DE CLIMATISATION ET/OU UN DISPOSITIF AUTOMATIQUE DE CLIMATISATION

(30) Priorität: 31.03.2001 DE 10116265
(43) Veröffentlichungstag der Anmeldung: 02.01.2004
(73) Patentinhaber: Daimler AG, 70327 Stuttgart (DE)
(72) Erfinder: BOGNER, Alexander, 71254 Ditzingen (DE); DAHM, Christoph, 71394 Kernen (DE)
(86) Internationale Anmeldenummer: PCT/EP2002/001826
(87) Internationale Veröffentlichungsnummer: WO 2002/078988

(56) Entgegenhaltungen:
- DE-A- 4 443 026
- US-A- 4 951 476
- US-A- 5 209 397
- US-A- 5 220 805

## Beschreibung

Die Erfindung betrifft eine Bedieneinheit mit wenigstens einem Bedienelement für eine Klimaanlage und/oder -automatik, insbesondere zur Einstellung der Luftmenge oder der Temperatur oder der Luftverteilung einer Klimaautomatik gemäß den gattungsbildenden Merkmalen des Anspruchs 1.

Eine Bedieneinheit mit wenigstens einem Bedienelement ist beispielsweise in der EP 0 814 965 B1 beschrieben. Es wird ein Bediengerät offenbart, das einen automatischen und einen manuellen Einstellbetrieb aufweist, wobei als Sollwert-Einstellmittel für die "Luftverteilung" und/oder die "Luftmenge" und/oder die "Lufttemperatur" jeweils eine manuell verstellbare analoge Sollwert-Einstellvorrichtung vorgesehen ist, durch die eine einfache manuelle Einstell-Handhabung ermöglicht wird. Als Anzeigemittel für die "Luftverteilung" und/oder "Luftmenge" und/oder "Lufttemperatur" jeweils eine manuell verstellbare analoge Sollwert-Einstellvorrichtung vorgesehen, durch die eine einfache manuelle Einstell-Handhabung ermöglicht wird. Als Anzeigemittel für die "Luftverteilung" und/oder die "Luftmenge" und/oder die "Lufttemperatur" ist jeder analogen Sollwert-Einstell-vorrichtung jeweils eine analoge Anzeigevorrichtung zugeordnet, die im manuellen Einstellbetrieb durch einen unabhängigen Fremdantrieb entsprechend dem eingestellten Sollwert als Sollwert-Anzeigevorrichtung unmittelbar analog nachgeführt wird, was eine eindeutige und schnelle Ablesung des eingestellten Wertes gewährleistet. Beim Übergang in den automatischen Einstellbetrieb durch Betätigung einer Automatiktaste führt der unabhängige Fremdantrieb die Anzeigevorrichtung entsprechend dem jeweiligen Istwert von "Luftverteilung" und/oder "Luftmenge" als Istwert-Anzeigevorrichtung unmittelbar analog nach, wodurch das vorher bei manueller Einstellung als Sollwert-Anzeige benutzte Anzeigemittel im Automatikbetrieb als Istwert-Anzeige mitbenutzbar ist. Als Sollwert-Einstellvorrichtung ist jeweils ein Drehknopf vorgesehen, dem konzentrisch zumindest über einen Teilumfang eine Skalenanzeige für das Sollwert-Anzeigemittel bzw. Istwert-Anzeigemittel zugeordnet ist. Die Automatikfunktion der Klimaautomatik steht in Ausschaltabhängigkeit von der manuellen Betätigung der Sollwert-Einstellmittel in Form der Drehknöpfe. Wird durch Betätigen des Automatik-Einschaltmittels, insbesondere in Form des Drucktasters, auf Automatikbetrieb zurückgeschaltet, regelt die Automatik die entsprechenden Werte nach ihrem eingegebenen Programm. Die Anzeigezeiger bewegen sich auf die neuen automatikspezifischen Werte und zeigen als Istwert-Anzeigevorrichtung den jeweiligen von der Automatik eingeregelten Wert an.
Die gattungsgemäße US 4, 951, 476 offenbart eine Klimaautomatik mit einem Automatikmodus und einem manuellen Modus. Es ist dabei möglich zwischen Automatikmodus und manuellem Modus umzuschalten. Sobald erkannt wird, dass vom Automatikmodus in den manuellen Modus umgeschalten wurde, wird der Anfangsmodus auf einen ersten vorbestimmten Modus gesetzt, wenn die ermittelte Aussentemperatur einen Schwellwert unterschreitet und auf einen zweiten vorbestimmten Modus gesetzt, wenn die ermittelte Aussentemperatur einen Schwellwert übersteigt. Dieser erste vorbestimmte Modus ist beispielsweise die Luft vollständig zur Windschutzscheibe zu leiten. Es wird mit Hilfe der Aussentemperatur bestimmt, ob gekühlt oder geheizt werden muss und hierzu die jeweiligen Kühl- bzw. Heizmodus eingestellt. Es wird hier zwar bei der Umstellung vom Automatikmodus in den manuellen Betrieb der Anfangsmodus auf einen ersten vorbestimmten Modus gesetzt. Dies erfolgt allerdings immer in Abhängigkeit der Aussentemperatur und dann auch nicht Bedienerabhängig. Es ist nicht davon abhängig, was der Bediener am Bedienelement eingestellt hat. Es zählt allein die Aussentemperatur welcher Modus eingestellt wird.

Bei diesen Arten von Bedienelementen ist von Nachteil, daß bei Umschaltung von der Automatikfunktion auf die manuelle Einstellfunktion, der am Bedienelement eingestellte Wert nicht dem gerade aktiven Wert entspricht, so daß wenn die Automatikfunktion eine Gebläsestärke von 3 eingeregelt hat und der eingestellte Wert auf einer Gebläsestärke von 1 steht, und der Bediener das Gebläsestellrad nun nach rechts von 1 auf 2 um die Gebläseleistung zu erhöhen bewegt, wird das Gebläse aber reduziert, da die noch aus dem Automatikbetrieb eingestellte Gebläseleistung der Stufe 3 war. Das Problem besteht auch bei den Bedienelementen für die Temperatur und die Luftverteilung.
Bei dem Bedienelement der US 4,951,476 ist nachteilig, dass bei der Umstellung von Automatikbetrieb in den manuellen Betrieb ein ganz spezieller vorgegebener Modus eingestellt wird, der zusätzlich noch abhängig ist von der Aussentemperatur. Es wird aber nicht die vom Bediener gewünschte Vorgabe bei der Umschaltung von Automatikbetrieb in den manuellen Betrieb berücksichtigt. Ausserdem wird auch nicht der von der Automatikfunktion eingestellte Modus berücksichtigt.

Die Aufgabe der Erfindung ist ein Bedienelement für eine Klimaautomatik mit einer manuellen Einstellfunktion so weiterzuentwickeln, daß der Bedienkomfort der Klimaanlage verbessert wird.

Die Aufgabe wird dadurch gelöst, daß bei Umstellen von der Automatikfunktion in die manuelle Einstellfunktion der eingestellte Wert der Einstellfunktion dem während der Umstellung ausgewählten Wert der Automatikfunktion entspricht.

Bei dieser Art eines Bedienelementes ist von Vorteil, daß Anzeigemittel vorgesehen sind, die im manuellen Betrieb den aktuell eingeregelten Wert anzeigen und der eingestellte Wert am Bedienelement dem eingeregelten Wert entspricht. Bei einer Verstellung des Bedienelementes auf eine Verstärkerrichtung wird nun das Gebläse erhöht, obwohl der eingestellte Wert vor der Umschaltung in die Automatikfunktion einer kleineren Gebläsestärke zugeordnet war. Durch die Umschaltung von der Automatikfunktion in die manuelle Einstellfunktion wird dem am Bedienelement eingestellten Wert der gerade bei der Umschaltung eingeregelte Wert der Klimaanlage zugeordnet. Dient das Bedienelement zur Einstellung der Gebläsestärke wird dem am Bedienelement eingestellte Wert die gerade bei der Umschaltung von der Automatikfunktion eingeregelte Gebläsestärke oder den nächsten Wert in Richtung des neuen Zielwertes oder den am naheliegendsten Anzeigewert möglichen Wert oder auf einen fest vorprogrammierten Wert zugeordnet. Diese Gebläsestärke wird mittels Anzeigemittel angezeigt, so daß der Bediener in der manuellen Einstellfunktion weiß, welche Gebläsestärke gerade eingestellt ist. Durch Verstellung des Bedienelementes in Verstärkerrichtung wird das Gebläse erhöht, was mit den Anzeigemitteln angezeigt wird. Analog verhält es sich bei einer Verstellung in Verkleinerungsrichtung. Dann wird die Gebläsestärke verkleinert, was auch in diesem Fall durch die Anzeigemittel angezeigt wird.

Die Erfindung wird anhand einer Figurenbeschreibung näher erläutert.

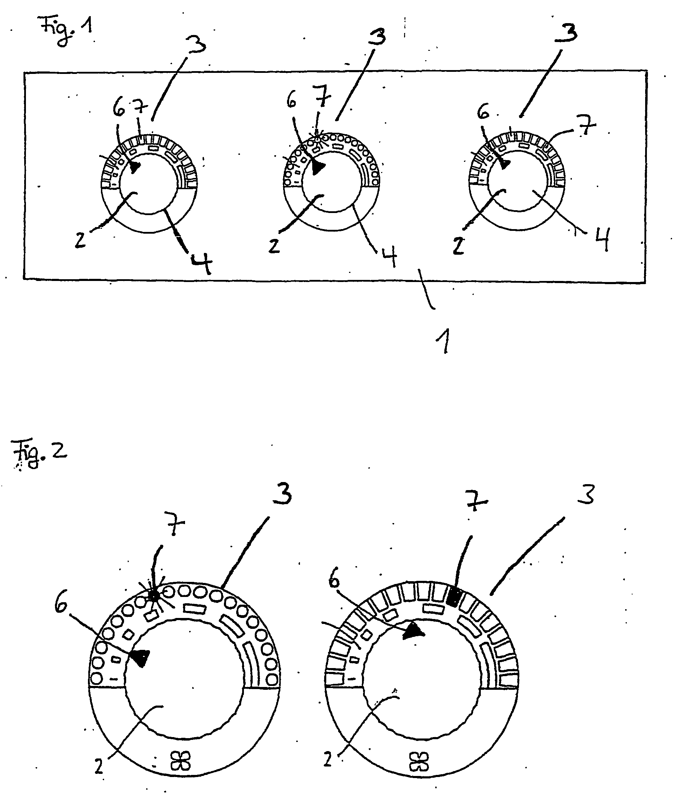

Fig. 1 zeigt ein Bedienelement mit einer Automatikfunktion und einer manuellen Einstellfunktion.

Fig. 1 zeigt eine Bedieneinheit 1 für eine Klimaautomatik mit drei Bedienelementen 3, wobei jedes Bedienelement 3 mit einer Automatikfunktion 2 und einer manuellen Einstellfunktion 4 ausgerüstet ist. Das Bedienelement 3 kann beispielsweise zur Änderung der Luftmenge, der Luftverteilung oder der Temperatur vorgesehen sein. Gewöhnlich weist eine Bedieneinheit 1 für eine Klimaautomatik mehrere Bedienelemente 3 auf, wobei ein Bedienelement 3 für die Temperatur, ein Bedienelement 3 für die Luftmenge und ein Bedienelement 3 für die Luftverteilung vorgesehen ist. Durch Drücken des mittleren Knopfes wird die Automatikfunktion 2 aktiviert und die mittels Bedienelement 3 einstellbare Funktion wird automatisch in Abhängigkeit vorgegebener Parameter eingestellt. Der am Bedienelement 3 eingestellte Wert 6 wird ignoriert bis die Automatikfunktion 2 deaktiviert wird und die manuelle Einstellfunktion 4 wieder aktiviert wird. Der am Bedienelement 3 eingestellte Wert 6 wird bei der Umschaltung von der Automatikfunktion 2 in die manuelle Einstellfunktion 4 dem von der Automatikfunktion 2 eingeregelten Wert oder den nächsten Wert in Richtung des neuen Zielwertes oder den am naheliegendsten Anzeigewert möglichen Wert oder auf einen fest vorprogrammierten Wert zugeordnet. Dient das Bedienelement 3 zur Einstellung der Gebläsestärke wird bei der Umschaltung von der Automatikfunktion 2 in die manuelle Einstellfunktion 4 die von der Automatikfunktion 2 eingeregelte Gebläsestärke dem am Bedienelement 3 eingestellten Wert 6 zugeordnet. Es sind um das Bedienelement 3 Anzeigemittel 7 angeordnet, die in der manuellen Einstellfunktion 4 den aktuellen Wert anzeigen. Die Anzeigemittel zeigen in der manuellen Einstellfunktion den von der Klimaanlage eingestellten und/oder zugeordneten Wert an. Die Anzeigemittel sind aus einer um das Bedienelement angeordneten Leuchtkette, insbesondere einer LED-Kette, die zur Positionsanzeige des von der Klimaanlage im manuellen Betrieb eingestellten Wertes angeordnet sind. Bei der Umschaltung zeigen Sie folglich den Wert an, den die Automatikfunktion 2 zum Zeitpunkt der Umschaltung eingeregelt hat. In der manuellen Einstellfunktion 4 bleibt dieser Wert dann eingestellt bis eine Verstellung am Bedienelement 3 erfolgt.

Fig. 2 zeigt zwei Bedienelemente 3, wobei an dem Bedienelement ein Wert eingestellt ist. Das Bedienelement für die manuelle Bedienfunktion ist als Endlos-Drehrad ausgestaltet. Im linken Bild zeigt das Anzeigemittel den von der Klimaanlage eingeregelten Wert während der Umstellung der Automatikfunktion in die manuelle Einstellfunktion. Es wird der eingeregelte Wert während der Umstellung angezeigt. Der eingestellte Wert wird nun diesem eingeregelten Wert zugeordnet. Das rechte Bild zeigt nun die Bedieneinheit mit dem Bedienelement nach einer Verstellung des Bedienelementes während der manuellen Einstellfunktion der Klimaanlage. Der eingestellte Wert wurde in die Verstärkerrichtung bewegt. Die Anzeigefunktion zeigt den neuen Wert an, der durch diesen Bedieneingriff von der Klimaanlage eingestellt wurde. Dient das gezeigte Bedienelement zur Einstellung der Gebläsestärke wird im Anzeigemittel in der linken Figur eine Gebläsestärke von 3 angezeigt. Der eingestellte Wert ist immer noch am selben Ort wie vor der Umschaltung der Automatikfunktion, ist allerdings jetzt nicht mehr dem damals eingeregelten Wert der Gebläsestärke 2 gleich, sondern ist jetzt dem von der Automatikfunktion eingeregelten Wert der Gebläsestärke 3 zugeordnet, obwohl am Bedienelement keine Veränderung erfolgt ist. Diese Veränderung ist aber durch die Anzeigemittel 7 sichtbar, die in der manuellen Einstellfunktion 4 den von der Klimaanlage eingeregelten Wert anzeigen, so daß der Bediener immer weiß, welche Gebläsestärke im Augenblick eingeregelt ist in welche Richtung das Bedienelement 3 bewegt werden muß, um eine Verkleinerung oder Vergrößerung des eingeregelten Wertes zu erhalten. Bei einer Verstellung des Bedienelementes 3 in die Verstärkerrichtung wird die Gebläsestärke von 3 auf 4 oder 5, je nach Einstellung erhöht. Bei einer Verstellung des Bedienelementes 3 in die Abschwächungsrichtung wird die Gebläsestärke von 3 auf 2 oder 1 heruntergeregelt.

## Patentansprüche

1. Bedieneinheit (1) mit wenigstens einem Bedienelement (3), insbesondere zur Einstellung der Luftmenge oder der Temperatur oder der Luftverteilung einer Klimaanlage, wobei eine Automatikfunktion (2) und eine manuelle Einstellfunktion (4) vorgesehen sind,
**dadurch gekennzeichnet,**
**daß** beim Umstellen von der Automatikfunktion (2) in die manuelle Einstellfunktion (4) der eingestellte Wert (6) der Einstellfunktion (4) dem während der Umstellung ausgewählten Wert der Automatikfunktion (2) oder dem nächsten Wert in Richtung des neuen Zielwertes oder dem am nächstliegendsten Anzeigewert (7) möglichen Wert zugeordnet wird.

2. Bedieneinheit mit wenigstens einem Bedienelement nach Anspruch 1,
**dadurch gekennzeichnet,**
**daß** Anzeigemittel (7) vorgesehen sind, die bei der manuellen Einstellfunktion (4) den von der Klimaanlage eingeregelten und/oder zugeordneten Wert anzeigen.

3. Bedieneinheit mit wenigstens einem Bedienelement nach den Ansprüchen 1 und 2,
**dadurch gekennzeichnet,**
**daß** die Anzeigemittel (7) aus einer um das Bedienelement (3) angeordneten Leucht-Kette, insbesondere einer LED-Kette, zur Positionsanzeige des von der Klimaanlage im manuellen Betrieb eingestellten und/oder zugeordneten Wertes anzeigt.

4. Bedienelement nach den Ansprüchen 1 bis 3,
**dadurch gekennzeichnet,**
**daß** das Bedienelement (3) für die manuelle Bedienfunktion als Endlos-Drehrad ausgestaltet ist.

## Claims

1. Operating unit (1) comprising at least one operating element (3), in particular for setting the air volume, the temperature or the air distribution of an air conditioning system, wherein an automatic function (2) and a manual setting function (4) are provided,
**characterised in that**
when switching from the automatic function (2) to the manual setting function (4), the set value (6) of the setting function (4) is assigned to the value of the automatic function (2) selected during the switch-over or to the nearest value towards the new target value or to the value obtainable at the nearest display value (7).

2. Operating unit comprising at least one operating element according to claim 1,
**characterised in that**
display means (7) are provided to indicate the value controlled and/or assigned by the air conditioning system in the manual setting function (4).

3. Operating unit comprising at least one operating element according to claims 1 and 2,
**characterised in that**
the display means (7) comprise an illuminated string, in particular an LED string, arranged around the operating element for indicating the position of the value set and/or assigned by the air conditioning system in the manual mode.

4. Operating element according to any of claims 1 to 3,
**characterised in that**
the operating element (3) is designed as a continuous rotary wheel for the manual operating function.

## Revendications

1. Unité de commande (1) équipée d'au moins un élément de commande (3), en particulier pour régler la quantité d'air ou la température ou la répartition de l'air d'une installation de climatisation, une fonction automatique (2) et une fonction manuelle de réglage (4) étant prévues,
**caractérisée en ce que**
lors du passage de la fonction automatique (2) à la fonction manuelle de réglage (4), la valeur réglée (6) de la fonction de réglage (4) est associée à la valeur de la fonction automatique (2) sélectionnée pendant la permutation, ou à la valeur suivante en direction de la nouvelle valeur cible, ou à la valeur qui est la plus proche possible de la valeur d'affichage (7).

2. Unité de commande équipée d'au moins un élément de commande selon la revendication 1, **caractérisée en ce que** sont prévus des moyens d'affichage (7) qui, lors de la fonction manuelle de réglage (4), affichent la valeur associée et/ou réglée par l'installation de climatisation.

3. Unité de commande équipée d'au moins un élément de commande selon les revendications 1 et 2, **caractérisée en ce que** les moyens d'affichage (7) à partir d'une chaîne lumineuse disposée autour de l'élément de commande (3), en particulier une chaîne à DEL, affichent la valeur associée et/ou réglée par l'installation de climatisation en mode manuel, en vue d'afficher la position.

4. Elément de commande selon les revendications 1 à 3, **caractérisé en ce que** l'élément de commande (3) pour la fonction de commande manuelle est configuré comme molette sans fin.
